# EUROPEAN PATENT SPECIFICATION

(11) **EP 4 145 908 B1**
(45) Date of publication and mention of the grant of the patent: **28.10.2026**
(21) Application number: 22193135.5
(22) Date of filing: 31.08.2022
(51) Int. Cl.: H04W 40/22, H04W 28/02, H04W 28/08

(54) **AN ASSOCIATION SOLUTION FOR A WIRELESS COMMUNICATION NETWORK**
ASSOZIATIONSLÖSUNG FÜR EIN DRAHTLOSES KOMMUNIKATIONSNETZ
SOLUTION D'ASSOCIATION POUR UN RÉSEAU DE COMMUNICATION SANS FIL

(30) Priority: 03.09.2021 FI 20215935
(43) Date of publication of application: 08.03.2023
(73) Proprietor: Wirepas Oy, 33720 Tampere (FI)
(72) Inventor: JUVEN, Ville, 33560 Tampere (FI)
(74) Representative: Berggren Oy

(56) References cited:
- WO-A1-2011/083389
- US-A1- 2008 253 327
- US-A1- 2012 224 483

## Description

### TECHNICAL FIELD

The invention concerns in general the technical field of wireless communication networks. Especially the invention concerns association processes in wireless communication networks.

### BACKGROUND

Typically, in wireless communication systems (e.g. 3G, LTE, 3GPP, or IEEE802.11) a radio device, a user equipment (UE) (e.g. in 3GPP systems), or a receiving station (STA) (e.g. in IEEE802.11 systems) initiates a radio connection to a Base Station (BS) or to an Access Point (AP) based on radio measurement to optimize link performance and sends an association request (called e.g. as RRC request in 3GPP systems) to the selected BS/AP. BS/AP is responsible of its load control by approving or rejecting received association requests. Similar associating approach may be applied also in wireless multi-hop networks, such as wireless sensor networks (WSNs), wireless mesh networks, Digital European Cordless Telecommunication 2020 (DECT-2020) -based networks. However, in the wireless multi-hop networks comprising a plurality of devices typically having limited resources, e.g. battery or processing power, caused for example by relatively low cost and simple components (e.g. radio communicator, processor, etc.), the intention is to avoid unsuccessful association attempts. Sending association request and association reject messages is power and time consuming for both the device initiating association and for the device responding association messages. For example, failed association attempts increase the time used for the association process.

Due to practical limitations of the technologies and environments, the wireless communication networks typically comprise devices that only produce data (non-router devices) and devices (router devices) that may produce data and are capable to participate application data routing through the network. The router devices may have limitations on how many associated devices they may serve. The devices that are served by the router devices, may be either router devices or non-router devices. Typically, it may possible that all associated devices are non-router devices, while router device do not anymore have room to associate to.

A patent publication US 2008/253327 A1 discloses a wireless sensor network, a node device thereof and a method for arranging communications therein.

A patent publication WO 2011/083389 A1 discloses a method for defining broadcast routers in a wireless multihop mesh network of nodes comprising a plurality of routing nodes potentially able to repeat a broadcast message.

A patent publication US 2012/224483 A1 discloses traffic management in distributed wireless networks.

### SUMMARY

The following presents a simplified summary in order to provide basic understanding of some aspects of various invention embodiments. The summary is not an extensive overview of the invention. It is neither intended to identify key or critical elements of the invention nor to delineate the scope of the invention. The following summary merely presents some concepts of the invention in a simplified form as a prelude to a more detailed description of exemplifying embodiments of the invention.

An objective of the invention is to present an association system, association methods, association devices, a computer program, and a computer readable medium for a wireless communication network. Another objective of the invention is that the association system, the association methods, the devices, the computer program, and the computer readable medium for a wireless communication network enables at least reducing unnecessary association request messages and association response messages indicating rejection of association request.

The objectives of the invention are reached by an association system, association methods, association devices, a computer program, and a computer readable medium as defined by the respective independent claims.

According to a first aspect, an association system for a wireless communication network is provided, wherein the system comprises: at least one association initiator device, and at least one association target device, wherein the at least one association initiator device and the at least one association target device belong to a plurality of communication devices; wherein each communication device of the plurality of the communication devices is a radio node device configured to provide a bi-directional radio communication with at least one of the plurality of the communication devices; wherein each association target device is configured to transmit beacon messages comprising load data of said association target device comprising at least data indicative of number of currently associated router devices of said association target device; wherein, after receiving the beacon message from at least one association target device, each association initiator device is configured to: decide whether to attempt to associate with the at least one association target device from which the beacon message is received on a basis of the load data comprised at least partly in the received beacon message from said at least one association target device, and send an association request message to each of the at least one association target device with which said association initiator device decides to attempt to associate; and wherein in response to receiving the association request message from at least one association initiator device, each association target device is configured to decide whether to approve the association request from the at least one association initiator device on a basis of data indicative of a maximum number of associated devices of said association target device, wherein if the maximum number of allowed associated devices is reached, each association target device is further configured to use data comprised in the association request message received from the at least one association initiator device to decide whether to approve the association request from the at least one association initiator device.

The decision may depend on an operation role of the association initiator device, wherein the operation role of the association initiator device may be a router role or a non-router role.

The load data may further comprise data indicative of maximum number of allowed associated devices, and/or data indicative of number of currently associated non-router devices.

The load data may further comprise one or more performance parameters comprising Random Access Channel (RACH) load data, channel load data, traffic load data, and/or a route cost data.

If the beacon message is received from at least two association target devices, each association initiator device may be configured to select at least one most suitable association target device on a basis of at least one selection criterion.

The at least one selection criterion may comprise the load data of the at least two association target devices comprised at least partly in the received beacon messages from the at least two association target devices.

The at least one selection criterion may further comprise link quality data, ability to use a higher order modulation, offered minimum bitrate for one associated device, guaranteed end-to-end latency characteristics, and/or availability of a route to a sink device.

The association request message may comprise data indicative of an operation role of the association initiator device.

The association request message may further comprise data indicative of an energy saving mode of the association initiator device, data indicative of number of currently associated devices of the association initiator device, and/or data indicative of a traffic load of the association initiator device.

Each association target device may be configured to disassociate at least one currently associated non-router device, if the maximum number of allowed associated devices is reached and said association target device decides to approve the association request from at least one association initiator device operating in a router role.

The wireless communication network may be a wireless sensor network (WSN), a Digital European Cordless Telecommunication 2020 (DECT-2020) -based network, or a wireless mesh network.

According to a second aspect, an association method for a wireless communication network is provided, wherein the method comprises following steps of: presenting at least one association initiator device and at least one association target device belonging to a plurality of communication devices operating as radio node devices; providing, by each communication device of the plurality of the communication devices, a bi-directional radio communication with at least one of the plurality of the communication devices; transmitting, by each association target device, beacon messages comprising load data of said association target device comprising at least data indicative of number of currently associated router devices of said association target device; after receiving the beacon message from at least one association target device, deciding, by each association initiator device, whether to attempt to associate with the at least one association target device from which the beacon message is received on a basis of the load data comprised at least partly in the received beacon message from said at least one association target device, sending, by each association initiator device, an association request message to each of the at least one association target device with which said association initiator device decides to attempt to associate, and in response to receiving the association request message from at least one association initiator device, deciding, by each association target device, whether to approve the association request from the at least one association initiator device on a basis of data indicative of a maximum number of associated devices of said association target device, wherein if the maximum number of allowed associated devices is reached, each association target device further uses data comprised in the association request message received from the at least one association initiator device to decide whether to approve the association request from the at least one association initiator device.

According to a third aspect, an association initiator device for participating in an association process in a wireless communication network is provided, wherein the association initiator device comprises: a controller and a radio communicator for operating as a radio node device, wherein the association initiator device is configured to provide, by the radio communicator, a bi-directional radio communication with at least one of plurality of communication devices; after receiving, by the radio communicator, a beacon message from at least one association target device, the association initiator device is configured to: decide, by the controller, whether to attempt to associate with the at least one association target device from which beacon message is received on a basis of the load data comprised at least partly in the received beacon message from said at least one association target device, wherein the beacon message comprises the load data of said association target device comprising at least data indicative of number of currently associated router devices of said association target device, and send, by the radio communicator, an association request message to each of the at least one association target device with which said association initiator device decides to attempt to associate.

According to a fourth aspect, an association method for an association process in a wireless communication network is provided, wherein the method comprises following steps of: providing, by a radio communicator of an association initiator device operating as a radio node device, a bi-directional radio communication with at least one of plurality of communication devices; after receiving a beacon message from at least one association target device, deciding, by a controller of the association initiator device, whether to attempt to associate with the at least one association target device from which the beacon message is received on a basis of load data comprised at least partly in the received beacon message from said at least one association target device, wherein the beacon message comprises the load data of said association target device comprising at least data indicative of number of currently associated router devices of said association target device; and sending, by the radio communicator of the association initiator device, an association request message to each of the at least one association target device with which said association initiator device decides to attempt to associate.

According to a fifth aspect, an association target device for participating in an association process in a wireless communication network is provided, wherein the association target device comprises: a controller, and a radio communicator for operating as a radio node device, wherein the association target device, is configured to provide, by the radio communicator, a bi-directional radio communication with at least one of plurality of communication devices, wherein the association target device, is configured to transmit, by the radio communicator, beacon messages comprising load data of the association target device comprising at least data indicative of number of currently associated router devices of the association target device, and wherein in response to receiving an association request message from at least one association initiator device, the association target device is configured to decide, by the controller, whether to approve the association request from the at least one association initiator device on a basis of data indicative of a maximum number of associated devices of said association target device, wherein if the maximum number of allowed associated devices is reached, the association target device is further configured to use data comprised in the association request message received from the at least one association initiator device to decide whether to approve the association request from the at least one association initiator device.

According to a sixth aspect, an association method for an association process in a wireless communication network is provided, wherein the method comprises following steps of: providing, by a radio communicator of an association target device operating as a radio node device, a bi-directional radio communication with at least one of plurality of communication devices, transmitting, by the radio communicator of the association target device, beacon messages comprising load data of the association target device comprising at least data indicative of number of currently associated router devices of the association target device, and in response to receiving an association request message from at least one association initiator device, deciding, by a controller of the association target device, whether to approve the association request from the at least one association initiator device on a basis of data indicative of a maximum number of associated devices of said association target device, wherein if the maximum number of allowed associated devices is reached, the association target device further uses data comprised in the association request message received from the at least one association initiator device to decide whether to approve the association request from the at least one association initiator device.

According to a seventh aspect, a computer program is provided, wherein the computer program comprises instructions, which, when the computer program is executed by a computer, cause the computer to carry out at least the steps of the methods described above.

According to an eighth aspect, a tangible, non-volatile computer readable medium is provided, wherein the computer readable medium comprises the computer program described above.

Various exemplifying and non-limiting embodiments of the invention both as to constructions and to methods of operation, together with additional objects and advantages thereof, will be best understood from the following description of specific exemplifying and non-limiting embodiments when read in connection with the accompanying drawings.

The verbs "to comprise" and "to include" are used in this document as open limitations that neither exclude nor require the existence of unrecited features. The features recited in dependent claims are mutually freely combinable unless otherwise explicitly stated. Furthermore, it is to be understood that the use of "a" or "an", i.e. a singular form, throughout this document does not exclude a plurality.

### BRIEF DESCRIPTION OF FIGURES

The embodiments of the invention are illustrated by way of example, and not by way of limitation, in the figures of the accompanying drawings.
Figure 1 illustrates schematically an association system in a wireless communication environment.
Figure 2 illustrates schematically a flowchart of an association method.
Figure 3 illustrates schematically an example format of load data comprised in a beacon message.
Figure 4 illustrates schematically an example of a decision process performed by an association target device.
Figure 5 illustrates operational parts of a wireless radio communication device.

### DESCRIPTION OF THE EXEMPLIFYING EMBODIMENTS

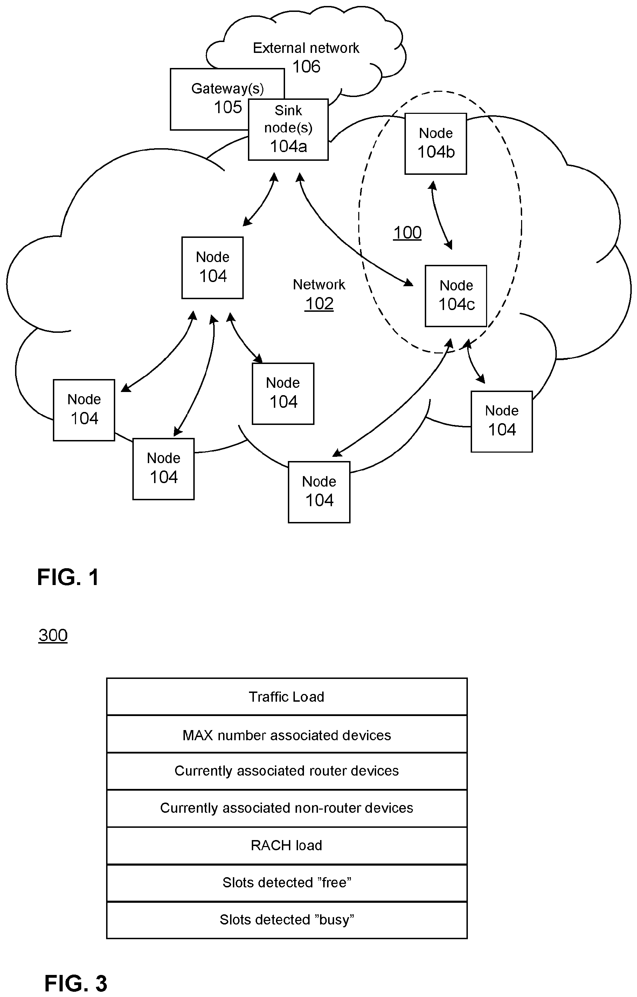

Figure 1 illustrates an association system 100, which operates in a wireless communication environment. The environment comprises a wireless radio communication network (system) 102, which comprises a plurality of wireless radio communication devices (nodes) 104. The devices 104 operate on a same spectrum comprising one or more frequency bands at a same geographical area, e.g. within the presented environment. The use of same spectrum enables a bidirectional radio communication between the devices 104 in the network 102, whereupon radio transmissions transmitted by one device 104 may be received by another device 104 and vice versa.

The system 100 may be applied to any wireless radio communication network 102 that uses packet transmissions in the communication, i.e. in data exchange. Preferably, the system 100 may be applied to any wireless radio communication network that may be used for multi-hop communication between the devices 104, i.e. the packets may be delivered over at least two consecutive radio links. The system 100 may be applied in wireless communication networks 102 complying Digital European Cordless Telecommunications (DECT-2020) standard. Some non-limiting examples to which the system 100 may also be applied may comprise, but is not limited to, a wireless multi-hop network, a wireless mesh network, e.g. wireless sensor network (WSN), a Bluetooth Low Energy (BLE) mesh network, a Zigbee network, a Thread network, a Public Land Mobile Network (PLMN), a Wireless Local Area Network (WLAN), a Low Power Wide Area Network (LPWAN), a cellular based local area network, a cellular network, and/or any other wireless networks. One example of WSN is explained in patent publication US 7,830,838.

The devices 104 are capable to receive transmissions with one radio technology, e.g. BLE transmissions or WLAN transmissions, which all transmissions are from the same network 102. However, at least one of the devices 104, e.g. one, two, three, four, or more devices, may be capable to receive transmissions with at least two radio technologies, e.g. BLE transmissions and WLAN transmissions, which all transmissions are all from the same network 102.

The DECT-2020 standard is a radio access technology developed by ETSI. The DECT-2020 supports massive machine-type communication (mMTC) and ultrareliable low latency communication (URLLC). On Physical (PHY) layer, the key technology components of the DECT-2020 are Orthogonal frequency-division multiplexing (OFDM), adaptive modulation and coding schemes (MCS), Modern Channel coding methods (Turbo, LDPC, Convolutional coding), Hybrid Automatic Repeat Request (HARQ) for both scheduled and contention based transmissions, and a support of multi-antenna transmissions with different Multiple-Input and Multiple-Output (MIMO) streams. On Medium access (MAC) layer and from system aspects, the key technology components of the DECT-2020 are a support of high number of Internet of Things (IoT) sensors, actuators, and other industrial applications; support of Mesh network topology, support of URLLC communication with very short delay (typical application may be wireless microphones); operation on frequencies that are license exempt; and support of multiple overlapping non-coordinated networks with cognitive radio capabilities to share spectrum resources between multiple networks.

The system 100 is used for establishing association between devices 104 to allow data routing through the network 102. The system 100 is explained mainly by using three devices 104a, 104b, 104c, which belong to the system 100, operate in the network 102, and form a group of devices 104a, 104b, 104c. These devices 104a, 104b, 104c however correspond with the devices 104. The network 102 may also comprise a plurality of other devices 104, which also participate to a formation of said group, whereupon the group comprises devices 104, 104a, 104b, 104c.

As above has been explained, each device 104 is able to provide, by means of its radio communicator 436, the bi-directional radio communication with at least one other device 104. This means that each device 104 may operate as a transmitter, as a receiver, or as a transmitter-receiver when each device 104 is able to transmit at least one message to other device(s) 104 and to receive at least one message from the other device(s) 104 in the network 102.

The system 100 may also comprise at least one gateway device 105, e.g. one, two, three, four, or more gateway devices. Each gateway device 105 operates as a gateway between the network 102 and other external network(s) 106, e.g. Internet, and delivers data in the network 102 and from the network 102. Each gateway device 105 communicates with at least one sink device (node) 104a, e.g. one, two, three, four, or more sink devices, and each sink device 104a operates as a radio interface for the gateway device 105 in the network 102. Each sink device 104a may locate physically in connection with the gateway device 105 or separately in a different part of the network 102. If the gateway 105 comprises several sink devices 104a, one may locate in connection with the gateway device 105 and others separately in different parts of the network 102.

The sink device(s) 104a is a fixed router device (router), but other node devices 104 are able to operate in different fixed or non-fixed roles in the network 102. The other devices 104 in the system 100 are router devices, i.e. devices operating in a router role, and non-router devices (non-routers), i.e. devices operating in a non-router role, depending on whether a device 104 needs to participate in data forwarding. One method for selecting router and non-router roles may be e.g. in accordance with the method explained in patent publication US 10,499,264.

Each router device 104 maintains a connectivity of the system 100 and routes (forwards) data of other devices 104 when necessary. Each non-router device 104 is able to provide a bi-directional communication in order to transmit its own data and to receive data directed for it similarly as sink and router devices 104, but the non-router device 104 does not route data of other devices 104. Each of devices 104 is able to operate at least as a router or non-router device.

The system 100 comprises the devices 104 so that all devices 104 are not able to communicate directly with the sink device(s) 104 (gateway device(s) 105) due to extensive distance between the devices 104 and limited radio range, whereupon it is necessary to use multi-link (multi-hop) communication between each device 104 and the sink device 104.

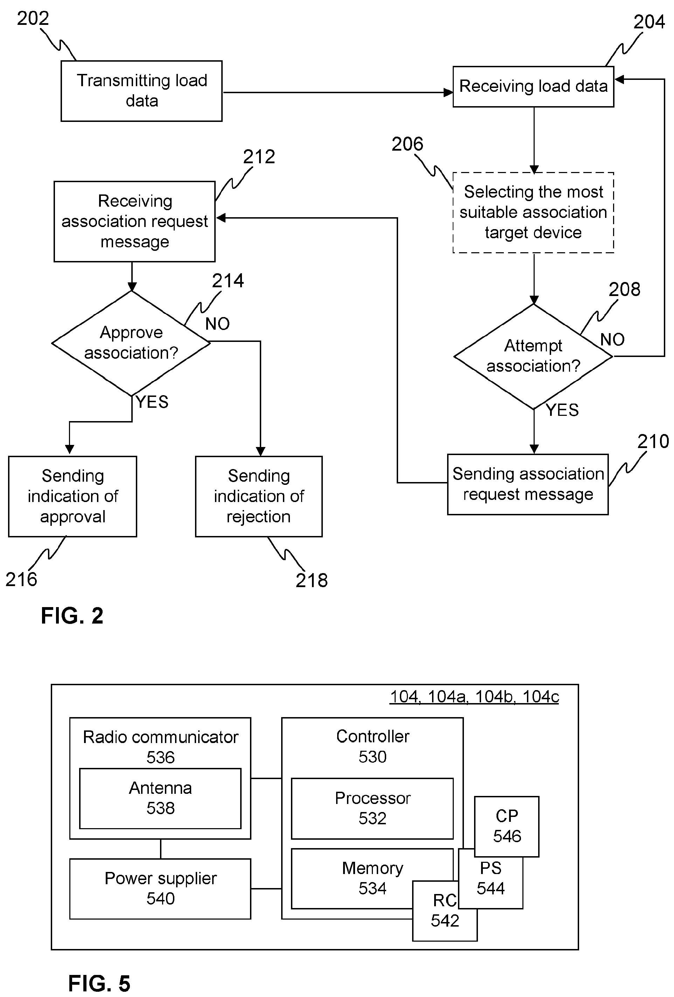

Figure 2 presents an association method for an association process, i.e. an association procedure, by the above discussed association system 100 in the wireless communication network 102. The purpose of association process is to initiate the bi-directional communication, i.e. data exchange, between two devices 104. One device 104 may have active association to multiple other devices 104 simultaneously. When the association is established, it may be maintained until it is explicitly released by either party. The method is explained by using one association initiator device 104b and one association target device 104c. The system 100 may additionally comprise at least one other association initiator device, e.g. one, two, three, four, or more other association initiator devices, including the association initiator device 104b. The system 100 may additionally comprise at least one other association target device, e.g. one, two, three, four, or more other association target devices, including the association target device 104c. The association initiator device 104b, i.e. the device at least attempting to initiate the bi-directional communication, may be a router device or a non-router device. In other words, each router device and each non-router device of the network 102 may operate as the association initiator device 104b of the system 100. The association target device 104c, i.e. the device with which the association is at least attempted to be established, may be a sink device 104a or a router device. In other words, each sink device 104a and each router device of the network 102 may operate as the association target device 104c of the system 100.

At a step 202, the association target device 104c transmits periodically, by means of its radio communicator 536, a beacon message comprising load data of said association target device 104c. In other words, at the step 202 each association target device 104c is configured to transmit the beacon message comprising its load data periodically to distribute the load data within the network 102. The beacon message may be e.g. a network beacon messages or a cluster beacon message. The load data comprises at least data indicative of number of currently associated router devices of said association target device 104c. The data indicative of the number of currently associated router devices may for example comprise the number of currently associated router devices expressed as an exact numerical value and/or as a percentage value. With the term "currently associated devices of a target device" is meant throughout this application devices having association to said association target device 104c substantially at that moment. However, the number of currently associated devices may be considered as a subjective view by the association target device 104c, because there may exist some delay in noticing that one or more associated devices have released the association with the association target device 104c.

The load data may further comprise data indicative of maximum number of allowed associated devices of said association target device 104c, and/or data indicative of number of currently associated non-router devices of said association target device 104c. The data indicative of the number of currently associated non-router devices may for example comprise the number of currently associated non-router devices expressed as an exact numerical value and/or as a percentage value. The data indicative of the maximum number of allowed associated devices may for example comprise the maximum number of allowed associated devices expressed as an exact numerical value and/or as a percentage value. The maximum number of allowed associated devices defines the maximum allowed number of associated devices of an association target device 104c, both router devices and non-router devices. The maximum number of allowed associated devices may be dependent for example on the underlaying radio technology, spectrum resources, time and frequency allocation of the network 102, memory restrictions of implementation the, and/or type and amount of application data desired in the network 102. Thus, the maximum number of allowed associated devices may be defined per implementation and/or there may also be different maximum number of allowed associated devices used by different association target devices 104c within the same network 102. In other words, all association target devices 104c of the system 100 in the network 102 may have the same maximum number of allowed associated devices. Alternatively, at least one association target device 104c of the system 100 in the network 102 may have a device specific, i.e. its own, maximum number of allowed associated devices. If the maximum number of allowed associated devices is the same for all devices 104 in the network 102, i.e. the maximum number of allowed associated devices is constant for all devices 104 in the network 102, the data indicative of maximum number of allowed associated devices may be defined as a network configuration parameter. The data indicative of maximum number of allowed associated devices defined as the network configuration parameter may be pre-provisioned for each device 104 of the network 102. If the data indicative of maximum number of allowed associated devices is defined as the network configuration parameter, the data indicative of maximum number of allowed associated devices may be comprised in the beacon messages, but may not necessarily be needed to be comprised in the beacon messages. Especially, if the maximum number of allowed associated devices is not device specific, i.e. is not the same for all devices 104 in the network 102, it is preferable that each association target device 104c includes the data indicative of the maximum number of allowed associated devices of said association target device 104c in the load data comprised in the beacon message. Each association target device 104c may keep count of the number of its currently associated router and non-router devices.

The load data may further comprise one or more performance parameters of the association target device 104c. These one or more performance parameters of the association target device 104c may comprise for example Random Access Channel (RACH) load data, channel load data, traffic load data, and/or a route cost data. Each association target device 104c may define the one or more performance parameters for example by observing transmissions by its associated devices and/or by at least one other association target device.

Figure 3 illustrates a non-limiting example format for the load data 300, which may be comprised in the beacon message, in a DECT 2020-based wireless communication network 102. In the example of Figure 3 possible example parameters comprised in the load data 300 are illustrated, but as discussed above the load data 300 comprised in the beacon message may comprise at least the data indicative of the number of associated router devices and the other parameters of the load data 300 comprised in the beacon message may be optional. The definition of the load data 300 illustrated in Figure 3 are defined in Table 1.

**Table 1: Definitions for the example load data 300 format of Figure 3.**

| Field | Bits | Definition |
|---|---|---|
| Traffic Load | 8 | Current traffic load percentage from maximum traffic load that can be routed by the router devices. Includes both own data and data from other devices to be routed forward. |
| MAX number associated devices | 8 or 16 | Maximum number of allowed associated devices |
| Currently associated router devices | 8 | Number of associated router devices. |
| Currently associated non-router devices | 8 | Number of associated non-router devices. |
| RACH Load | 8 | Percentage of used RACH resources from all configured RACH resources. |
| Slots detected "free" | 8 | Percentage of slots detected as "free". |
| Slots detected "busy" | 8 | Percentage of slots detect as "busy" |

At as step 204, the association initiator device 104b receives, by means of its radio communicator 536, a beacon message from at least one association target device, e.g. the association target device 104c. The received beacon message comprises the load data of said association target device 104c as described above.

At a step 208, after receiving the beacon message from the at least one association target device 104c at the step 204, the association initiator device 104b decides, by means of its controller 530, whether to attempt to associate with the at least one association target device 104c from which the beacon message is received on a basis of the load data comprised at least partly in the received beacon message from said at least one association target device 104c. As discussed above, the load data may comprise at least the data indicative of maximum number of allowed associated devices in addition to the data indicative of the number of currently associated router devices. If the maximum number of allowed associated devices is device specific, the data indicative of the maximum number of allowed associated devices is comprised in the load data comprised in the beacon messages. Alternatively or in addition, if the maximum number of allowed associated devices is the same for all devices in the network 102, the data indicative of the maximum number of allowed associated devices is defined as the network configuration parameter, and may not necessarily be comprised in the beacon messages. Thus, the load data of the at least one association target device 104c may be at least partly, i.e. partly or in its entirety, comprised in the received beacon message from the at least one association target device 104c.

According to an example, the decision at the step 208 may depend on the operation role of the association initiator device 104b. In other words, the decision process at the step 208 may be different depending on whether the association initiator device 104b is a router device or a non-router device.

Next some examples of the decision process at the step 208 are disclosed. In these examples, it is assumed that the association initiator device 104b receives the beacon message from one association target device 104c. However, similar decision process at the step 208 may be applied for each association target device 104c, if the association initiator device 104b receives the beacon message from more than one association target device 104c.

According to an example, if the association initiator device 104b is a router device, it may decide to attempt to associate with the association target device 104c, if the number of currently associated router devices of the association target device 104c expressed as a percentage value is less than 100%.

According to another example, if the association initiator device 104b is a router device, it may decide to attempt to associate with the association target device 104c, if the number of currently associated router devices of the association target device 104c is smaller than maximum number of allowed associated devices of the selected association target device 104c. The maximum number of allowed associated devices of the association target device 104c may be comprised in the load data comprised in the received beacon message as discussed above. Alternatively, the maximum number of allowed associated devices of the association target device 104c may be defined as the network configuration parameter as discussed above.

Alternatively, according to an example, if the association initiator device 104b is a non-router device, it may decide to attempt to associate with the association target device 104c, for example if the number of currently associated router devices of the association target device 104c expressed as a percentage value is less than 100%. Alternatively, even a stricter limitation may be implemented, for example to decide to attempt to associate with the association target device 104c, if the number of currently associated router devices of the association target device 104c expressed as a percentage value is less than 75%.

According to another example, if the association initiator device 104b is a non-router device and the load data comprises further the data indicative of the number of currently associated non-router devices of the association target device 104c, it may decide to attempt to associate with the association target device, if the sum of the number of currently associated router devices of the association target device 104c expressed as a percentage value and the number of currently associated non-router devices of the association target device 104c expressed as a percentage value is less than 100%.

According to yet another example, if the association initiator device 104b is a non-router device and the load data comprises further the data indicative of the number of currently associated non-router devices of the association target device 104c, it may decide to attempt to associate with the association target device 104c, if the sum of the number of currently associated router devices of the association target device 104c and the number of currently associated non-router devices of the association target device 104c is smaller than the maximum number of allowed associated devices of the selected association target device 104c. The maximum number of allowed associated devices of the selected association target device 104c may be comprised in the load data comprised in the received beacon message as discussed above. Alternatively, the maximum number of allowed associated devices of the association target device 104c may be defined as the network configuration parameter as discussed above.

In both cases, i.e. the association initiator device 104b is a router device or a non-router device, the association initiator device 104b may further use the one or more performance parameters of the association target device 104c comprised in the load data in the decision at the step 208 whether to attempt to associate with the association target device 104c or not. These one or more performance parameters comprised in the load data may comprise the RACH load data, the channel load data, the traffic load data, and/or the route cost data as discussed above. Alternatively or in addition, the association initiator device 104b may further use at least one additional performance parameter, e.g. link quality data, in the decision whether to attempt to associate with the association target device 104c or not. The association initiator device 104b may define the link quality data for example based on the signal strength of the received beacon message from the association target device 104c.

The decision whether to attempt to associate with the association target device 104c at the step 208 enables at least reducing or even avoiding unnecessary association request messages and rejection signaling.

If the association initiator device 104b receives the beacon message from at least two association target devices 104c at the step 204, the association initiator device 104b may select, by its controller 530, at a step 206 at least one most suitable association target device 104c on a basis of at least one selection criterion, e.g. at least one selection parameter. The selection may be performed before the decision at the step 208 as illustrated in Figure 2 as an optional step. After the selection of the at least one most suitable association target device 104c, the association initiator device 104b may decide at the step 208 whether to attempt to associate with the at least one selected (i.e. the most suitable) association target device 104c on a basis of the load data comprised at least partly in the received beacon message from the at least one selected association target device 104c. In other words, the association initiator device 104b may first select at the step 206 at least one most suitable association target device 104 and after the selection, perform the decision process for the at least one selected (most suitable) association target device 104c at the step 208 as described above. Alternatively, the selection may be performed after the decision performed at the step 208. In that case the association initiator device 104b may first decide at the step 208 whether to attempt to associate with the at least two association target devices 104c from which the beacon message is received as described above. After the decision at the step 208 the association initiator device 104b may further select at the step 206 at least one most suitable association target device 104c on a basis of at least one selection criterion. In other words, the association initiator device 104b may first perform the decision process for the at least two association target devices 104c at the step 208 as described above, and after the decision select at the step 206 the at least one most suitable association target device 104 at the step 206.

The at least one selection criterion may comprise the load data of the at least two association target devices 104c comprised at least partly in the received beacon message from the at least two association target devices 104c. As discussed above, the load data may comprise at least the data indicative of maximum number of allowed associated devices in addition to the data indicative of the number of currently associated router devices. If the maximum number of allowed associated devices is device specific, the data indicative of the maximum number of allowed associated devices is comprised in the load data comprised in the beacon messages. Alternatively or in addition, if the maximum number of allowed associated devices is the same for all devices in the network 102, the data indicative of the maximum number of allowed associated devices is defined as the network configuration parameter, and may not necessarily be comprised in the beacon messages. Thus, the load data of the at least two association target devices 104c may be at least partly, i.e. partly or in its entirety, comprised in the received beacon message from the at least two association target device 104c as described above. The use of the load data of the at least two association target devices 104c as the at least one selection criterion at the step 206 in the selection of the at least one most suitable association target device 104c enables to balance the system load between different routing devices 104.

The at least one selection criterion may further comprise one or more additional parameters of the at least two association target devices 104c. The one or more additional parameters of each association target device 104c may comprise e.g. the link quality data, ability of said association target device to use a higher order modulation, offered minimum bitrate for one associated device of said association target device, guaranteed end-to-end latency characteristics of the link, availability of a route said the association target device to a sink device, and/or any other additional parameter. For example, the association initiator device 104b may first select one or more candidates for the at least one most suitable association target device by using the load data of the at least two association target devices as described above and then select the at least one most suitable association target device from among the one or more candidate target devices by using the one or more additional parameters of the at least two association target devices explained above. Each association initiator device 104b may define the one or more additional parameters for example based on the received beacon message(s) from the association target devices 104c.

The selection of the at least one most suitable association target device 104c at the step 206 may comprise for example a comparison between respective at least one selection criterion of the at least two association target devices 104c and a selection of the at least one most suitable association target device from among the at least two association target devices 104c based on the result of the comparison. For example, the association initiator device 104b may compare the respective selection criteria, e.g. the respective load data or the respective one or more additional parameters, of the at least two association target devices 104c to each other, and select the at least one most suitable association target device 104c based on the result of the comparison for example, but not limited to, the at least one association target device with the highest selection parameter, with the lowest selection parameter value, with the selection parameter exceeding a predefined limit, or with the selection parameter being less than a predefined limit, depending on the used at least one selection parameter. For example, if the used at least one selection criterion is the number of currently associated router devices, the association initiator device 104b may compare the number of currently associated router devices of the at least two association target devices 104c to each other and select the at least one association target device 104c for example with the highest number of currently associated router devices or with the number of currently associated router devices exceeding a predefined limit.

According to an example, the at least one selection criterion may be prioritized. For example, at least one selection criterion may be prioritized over at least one other selection criterion, when defining the at least one selection criterion to be used in the selection at the step 206. Alternatively, for example in case of using more than one selection criteria, the order of the selection criteria used in the selection at the step 206 may be prioritized.

Next some examples of the selection process at the step 206 are disclosed. In these examples, it is assumed that the association initiator device 104b receives the beacon message from two association target devices 104c, i.e. association target device A and association target device B. However, similar selection process at the step 206 may also be applied if the association initiator device 104b receives the beacon message from more than two association target devices 104c. Although the selection processes in these examples is disclosed by using a single selection criterion, the association initiator device 104b may also use more than one selection criteria in the selection process. The selection process may also be performed by using any other at least one selection criterion than the selection criteria used in these examples.

According to an example, if the traffic load of the association target device A is e.g. 90 % and the traffic load of the association target device B is e.g. 20 %, the association initiator device 104b may select the association target device B as the most suitable association target device 104c.

According to another example, if the link quality data of the association target device A indicates better link quality than the link quality data of the association target device B, the association initiator device 104b may select the association target device A as the most suitable association target device 104c.

According to yet another example, if the association target device A has e.g. five currently associated router devices and the association target device B has e.g. eight currently associated router devices, the association initiator device 104b may select the association target device A as the most suitable association target device 104c.

The selection of the at least one most suitable association target device at the step 206 enables at least reducing or even avoiding unnecessary association request messages and rejection signaling, i.e. association response messages indicating rejection of association request. The unnecessary association request messages and rejection signaling would consume energy and spectral resources.

At a step 210, the association initiator device 104b sends, by means of its radio communicator 536, an association request message to each of the at least one association target device 104c with which the association initiator device 104b decides to attempt to associate at the step 208. The association request message comprises at least data indicative of an operation role of the association initiator device 104b. Each association initiator device 104b is aware of its operation role, i.e. whether the association initiator device 104b is operating in the router role or in the non-router role. The content of the association request message may be divided into one or more radio link messages, e.g. packets or protocol data units (PDUs).

At a step 212, the association target device 104c receives, by means of its radio communicator 536, the association request message from at least one association initiator device, e.g. from the association initiator device 104b. Each received association request message comprises at least the data indicative of the operation role of the association initiator device 104b from which said association request message is received as discussed above.

At a step 214, in response to receiving the association request message from at least one association initiator device, e.g. from the association initiator device 104b, at the step 212, each association target device, e.g. the association target device 104c, decides, by means of its controller 530, whether to approve the association request received from the at least one association initiator device 104b on a basis of data indicative of the maximum number of allowed associated devices of said association target device 104c. If the maximum number of allowed associated devices is not reached, the association target device 104c may decide to approve all received association requests independently of the operation role of the association initiator device 104b at the step 214. If the maximum number of allowed associated devices is reached, the association target device 104c may further use the data comprised in the association request message received from the at least one association initiator device 104b to decide whether to approve the association request from the at least one association initiator device 104b at the step 214.

In response to deciding whether to approve the association request from the at least one association initiator device 104b at the step 214, the association target device 104c sends, by means of its radio communicator 536, an association response message to the at least one association initiator device 104b indicating either approval of the association request or rejection of the association request at a step 216 or at a step 218 depending on the made decision. If the association target device 104c decides to approve the association request from at least one association initiator device 104b at the step 214, the association target device 104c sends the association response message comprising an indication of approval of the association request to said at least one association initiator device 104b at the step 216. Alternatively, if the association target device 104c decides to reject the association request from at least one association initiator device 104b at the step 214, the association target device 104c sends the association response message comprising an indication of rejection of the association request to said at least one association initiator device 104b at the step 216. The content of the association response message may be divided into one or more radio link messages, e.g. packets or protocol data units (PDUs).

The association target device 104c may prioritize the router devices over the non-router devices, when deciding whether to approve the association request from the at least one association initiator device 104b at the step 214. For example, the association target device 104c may disassociate at least one currently associated non-router device, if the maximum number of allowed associated devices is reached and said association target device 104c decides to approve the association request from at least one association initiator device 104b operating in the router role. According to another example, the association target device 104c may decide not to approve the association request from at least one association initiator device 104b operating in the non-router role, if the maximum number of allowed associated devices is reached. The prioritizing of the router devices over the non-router devices, when deciding whether to approve the association request from the at least one association initiator device 104b improves the routing performance of the network 102.

The association request message may further comprise data indicative of an energy saving mode (e.g. Low Energy (LE)/Low Latency (LL) mode) of the association initiator device 104b, data indicative of number of currently associated devices of the association initiator device 104b, and/or data indicative of a traffic load of the association initiator device 104b. In the LL mode, the associator initiator devices 104b are always in an active state, i.e. not in a sleep state, to be able to receive low latency data to be routed (forwarded). The association initiator devices 104b operating in the LL mode try to optimize the use of their radio communicator 536 in order to enable routing of the low latency data. The association initiator devices 104b operating in the LL mode do not try to save power. Each association initiator device 104b is aware of its energy saving mode, defines its traffic load, and keeps count of the number of its currently associated devices. The association target device 104c may further use this further data comprised in the association request message to decide whether to approve the association request from the at least one association initiator device 104b. For example, the association initiator devices 104b operating in the router role supplied with mains power (i.e. operating in LL mode) may be prioritized over other association initiator devices 104b operating in the router role, because the association initiator devices 104b operating in the router role supplied with mains power are more capable in routing. According to another example the association initiator devices 104b operating in the router role with less battery resources (i.e. operating in LE mode) may be prioritized over the more capable association initiator devices operating in the router role so that they need to spend less energy for searching alternative connections.

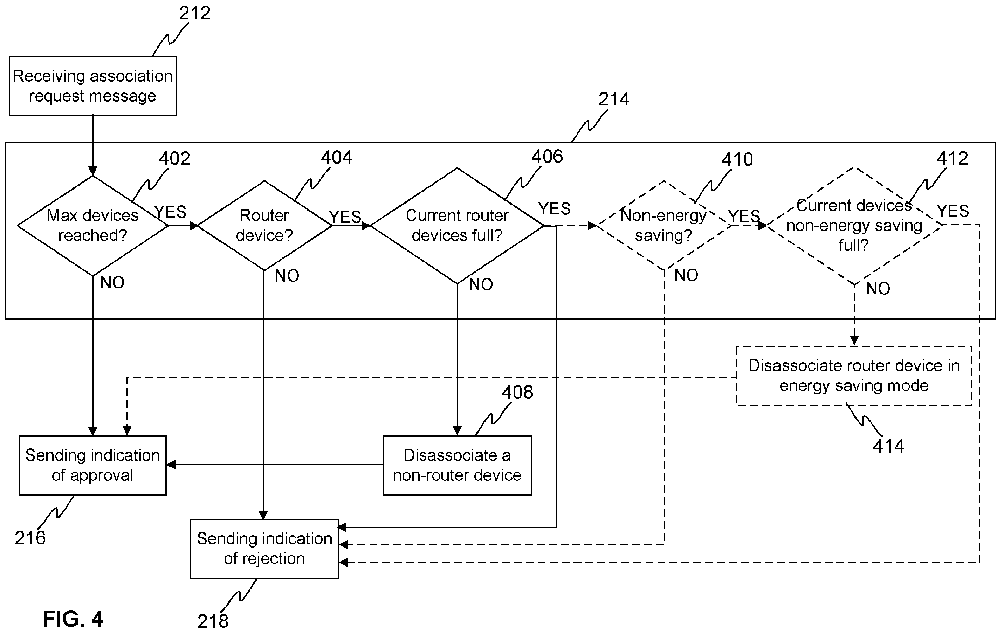

Figure 4 illustrates an example of the decision process performed by the association target device 104c at the step 214. In the example of Figure 4, the router devices are prioritized over the non-router devices at steps. Figure 4 also illustrates an optional prioritization (optional steps 410-414, which are illustrated with dashed line in Figure 4), in which among multiple router devices, the router devices operating in non-energy saving mode are prioritized over router devices not operating in the non-energy saving mode, i.e. router devices operating in the energy saving mode. At a step 402, in response to receiving at the step 212 the association request message from an association initiator device 104b, the association target device 104c checks whether the maximum number of allowed associated device is reached. If the maximum number of allowed associated devices is not reached, the association target device 104c decides to approve the association request and sends 216 the association response message comprising the indication of approval of the association request to the association initiator device 104b. If the maximum number of allowed associated devices is reached at the step 402, the association target device 104c next defines at a step 404 whether the association initiator device 104b, from which the association request message is received, is a router device or a non-router device. If the association initiator device 104b is a non-router device, the association target device 104c decides to reject the association request and sends 218 the association response message comprising the indication of rejection of the association request to the association initiator device 104b. If the association initiator device is a router device, the association target device 104c checks at a step 406 whether the number of currently associated router devices is full, i.e. the maximum number of currently associated router devices is reached. If the number of currently associated router devices is not full at the step 406, the association target device 104c decides to approve the association request, disassociate at least one currently associated non-router device at a step 408, and send 216 the association response message comprising the indication of approval of the association request to the association initiator device 104b. If the number of currently associated router devices is full at the step 406, the association target device 104c may send 218 the association response message comprising the indication of rejection of the association request to the association initiator device 104b. Alternatively, the number of currently associated router devices is reached at the step 406, the association target device 104c may further use the further data comprised in the association request message to decide whether to approve the association request from the association initiator device 104b, for example by checking at a step 410 whether the association initiator device 104b, from which the association request message is received, is operating in a non-energy saving mode, e.g. in the LL mode. If the association initiator device 104b is operating in an energy saving mode, i.e. is not operating in the non-energy saving mode, at the step 410, the association target device 104c may decide to reject the association request and send 218 the association response message comprising the indication of rejection of the association request to the association initiator device 104b. If the association initiator device 104b is operating in the non-energy saving mode at the step 410, the association target device 104c may further check whether the number of currently associated devices operating in the non-energy saving mode is full, i.e. the maximum number of currently associated devices operating in the non-energy saving mode is reached, at a step 412. If the number of currently associated devices operating in the non-energy saving mode is reached at the step 412, the association target device 104c may decide to reject the association request and send 218 the association response message comprising the indication of rejection of the association request to the association initiator device 104. If the number of currently associated devices operating in the non-energy saving mode is not reached at the step 412, the association target device 104c may decide to approve the association request, disassociate at least one currently associated router device operating in the energy saving mode at a step 414, and send 216 the association response message comprising the indication of approval of the association request to the association initiator device 104b.

Figure 5 illustrates a device 104 (104a, 104b, 104c) that is able to communicate in the network 102 and to perform the relevant features (steps) of association method as above has been explained. In other words, the device 104 that is able to operate as the association initiator device 104b and to perform the features of the association method relevant to the association initiator device 104b as above has been explained or as the association target device 104c and to perform the features of the association method relevant to the association target device 104c as above has been explained.

The device 104 comprises the controller (control part) 530 that controls operations of its parts 532, 534, 536, 538, 540 so that the device 104 operates as above has been explained.

The controller 530 comprises a processor (processor part) 532 that performs operator-initiated and/or computer program-initiated instructions, and processes data in order to run applications. The processor 532 may comprise at least one processor, e.g. one, two, three, four, or more processors.

The controller 530 also comprises the memory (memory part) 534 in order to store and to maintain data. The data may be instructions, computer programs, and data files. The memory 534 comprises at least one memory, e.g. one, two, three, four, or more memories.

The device 104 also comprises the radio communicator (radio communication part, data transferer) 536 and an antenna (antenna part) 538 that the controller 530 uses in order to send commands, requests, messages, and data to at least one of entities in the system 100, e.g. devices 104, via the antenna 538. The radio communicator 536 also receives commands, requests, and data from at least one of entities in the system 100, e.g. devices 104, via the antenna 538. The communication between the radio communicator 536 of the device 104 and other entities in the system 100 is provided through the antenna 538 wirelessly.

The device 104 may further comprise a power supplier (power supply part) 540. The power supplier 540 comprises components for powering the device 104, e.g. a battery and a regulator.

The memory 534 stores at least a radio communication application 542 for operating (controlling) the radio communicator 536, and a power supply application 544 for operating the power supplier 540.

The memory 534 also stores a computer program (computer software, computer application) 546, which uses at least one of parts 536, 538, 540 in order to perform at least the operations of the device 104 explained above in context of the previous figures, when it is executed (run) in a computer, e.g. in the device 104, by means of the controller 530.

The computer program 546 may be stored in a tangible, non-volatile computer-readable storage medium, e.g. a Compact Disc (CD) or Universal Serial Bus (USB) -type storage device.

The specific examples provided in the description given above should not be construed as limiting the applicability and/or the interpretation of the appended claims. Lists and groups of examples provided in the description given above are not exhaustive unless otherwise explicitly stated.

## Claims

1. An association system (100) for a wireless communication network (102), comprising:
at least one association initiator device (104b), and
at least one association target device (104c),
wherein the at least one association initiator device (104b) and the at least one association target device (104c) belong to a plurality of communication devices (104, 104a, 104b, 104c);
wherein each communication device (104, 104a, 104b, 104c) of the plurality of the communication devices (104, 104a, 104b, 104c) is a radio node device configured to provide a bi-directional radio communication with at least one of the plurality of the communication devices (104, 104a, 104b, 104c);
wherein each association target device (104c) is configured to transmit beacon messages comprising load data of said association target device (104c) comprising at least data indicative of number of currently associated router devices of said association target device (104c);
wherein, after receiving the beacon message from at least one association target device (104c), each association initiator device (104b) is configured to:
decide whether to attempt to associate with the at least one association target device (104c) from which the beacon message is received on a basis of the load data comprised at least partly in the received beacon message from said at least one association target device (104c), and
send an association request message to each of the at least one association target device (104c) with which said association initiator device (104b) decides to attempt to associate; and
wherein in response to receiving the association request message from at least one association initiator device (104b), each association target device (104c) is configured to decide whether to approve the association request from the at least one association initiator device (104b) on a basis of data indicative of a maximum number of associated devices of said association target device (104c), wherein if the maximum number of allowed associated devices is reached, each association target device (104c) is further configured to use data comprised in the association request message received from the at least one association initiator device (104b) to decide whether to approve the association request from the at least one association initiator device (104b).

2. The system (100) according to claim 1, wherein the decision depends on an operation role of the association initiator device (104b), the operation role of the association initiator device (104b) is a router role or a non-router role.

3. The system (100) according to any of the preceding claims, wherein the load data further comprises data indicative of maximum number of allowed associated devices, and/or data indicative of number of currently associated non-router devices.

4. The system (100) according to claim 3, wherein the load data further comprises one or more performance parameters comprising Random Access Channel (RACH) load data, channel load data, traffic load data, and/or a route cost data.

5. The system according to any of the preceding claims, wherein if the beacon message is received from at least two association target devices (104c), each association initiator device (104b) is configured to select at least one most suitable association target device (104c) on a basis of at least one selection criterion.

6. The system (100) according to claim 5, wherein the at least one selection criterion comprises the load data of the at least two association target devices (104c) comprised at least partly in the received beacon messages from the at least two association target devices (104c).

7. The system (100) according to claim 6, wherein the at least one selection criterion further comprises link quality data, ability to use a higher order modulation, offered minimum bitrate for one associated device, guaranteed end-to-end latency characteristics, and/or availability of a route to a sink device.

8. The system (100) according to any of the preceding claims, wherein the association request message comprises data indicative of an operation role of the association initiator device (104b).

9. The system (100) according to claim 8, wherein the association request message further comprises data indicative of an energy saving mode of the association initiator device (104b), data indicative of number of currently associated devices of the association initiator device (104b), and/or data indicative of a traffic load of the association initiator device (104b).

10. The system (100) according to any of the preceding claims, wherein each association target device (104c) is configured to disassociate at least one currently associated non-router device, if the maximum number of allowed associated devices is reached and said association target device (104c) decides to approve the association request from at least one association initiator device (104b) operating in a router role.

11. The system (100) according to any of the preceding claims, wherein the wireless communication network (102) is a wireless sensor network (WSN), a Digital European Cordless Telecommunication 2020 (DECT-2020) -based network, or a wireless mesh network.

12. An association method for a wireless communication network (102), wherein the method comprises following steps of:
presenting at least one association initiator device (104b) and at least one association target device (104c) belonging to a plurality of communication devices (104, 104a, 104b, 104c) operating as radio node devices;
providing, by each communication device (104, 104a, 104b, 104c) of the plurality of the communication devices, a bi-directional radio communication with at least one of the plurality of the communication devices;
transmitting (202), by each association target device (104c), beacon messages comprising load data of said association target device (104c) comprising at least data indicative of number of currently associated router devices of said association target device (104c);
after receiving (204) the beacon message from at least one association target device (104c), deciding (208), by each association initiator device (104b), whether to attempt to associate with the at least one association target device (104c) from which the beacon message is received on a basis of the load data comprised at least partly in the received beacon message from said at least one association target device (104c),
sending (210), by each association initiator device (104b), an association request message to each of the at least one association target device (104c) with which said association initiator device (104b) decides to attempt to associate, and
in response to receiving (212) the association request message from at least one association initiator device (104b), deciding (214), by each association target device (104c), whether to approve the association request from the at least one association initiator device (104b) on a basis of data indicative of a maximum number of associated devices of said association target device (104c), wherein if the maximum number of allowed associated devices is reached, each association target device (104c) further uses data comprised in the association request message received from the at least one association initiator device (104b) to decide whether to approve the association request from the at least one association initiator device (104b).

13. An association initiator device (104b) for participating in an association process in a wireless communication network (102), wherein the association initiator device (104b) comprises:
a controller (530), and
a radio communicator (536) for operating as a radio node device,
wherein the association initiator device (104b) is configured to provide, by the radio communicator (536), a bi-directional radio communication with at least one of plurality of communication devices;
wherein after receiving, by the radio communicator (536), a beacon message from at least one association target device (104c), the association initiator device (104b) is configured to:
decide, by the controller (530), whether to attempt to associate with the at least one association target device (104c) from which the beacon message is received on a basis of load data comprised at least partly in the received beacon message from said at least one association target device (104c), wherein the beacon message comprises the load data of said association target device (104c) comprising at least data indicative of number of currently associated router devices of said association target device (104c), and
send, by the radio communicator (536), an association request message to each of the at least one association target device (104c) with which said association initiator device (104b) decides to attempt to associate.

14. An association method for an association process in a wireless communication network (102), wherein the method comprises following steps of:
providing, by a radio communicator (536) of an association initiator device (104b) operating as a radio node device, a bi-directional radio communication with at least one of plurality of communication devices;
after receiving (204) a beacon message from at least one association target device (104c), deciding (208), by a controller (530) of the association initiator device (104b), whether to attempt to associate with the at least one association target device (104c) from which the beacon message is received on a basis of load data comprised at least partly in the received beacon message from said at least one association target device (104c), wherein the beacon message comprises the load data of said association target device (104c) comprising at least data indicative of number of currently associated router devices of said association target device (104c); and
sending (210), by the radio communicator (536) of the association initiator device (104b), an association request message to each of the at least one association target device (104c) with which said association initiator device (104b) decides to attempt to associate.

15. An association target device (104c) for participating in an association process in a wireless communication network (102), wherein the association target device (104c) comprises:
a controller (530), and
a radio communicator (536) for operating as a radio node device,
wherein the association target device (104c) is configured to provide, by the radio communicator (536), a bi-directional radio communication with at least one of plurality of communication devices,
wherein the association target device (104c) is configured to transmit, by the radio communicator (536), beacon messages comprising load data of the association target device comprising at least data indicative of number of currently associated router devices of the association target device (104c), and
wherein in response to receiving an association request message from at least one association initiator device (104b), the association target device (104c) is configured to decide, by the controller (530), whether to approve the association request from the at least one association initiator device (104b) on a basis of data indicative of a maximum number of associated devices of said association target device (104c), wherein if the maximum number of allowed associated devices is reached, the association target device (104c) is further configured to use data comprised in the association request message received from the at least one association initiator device (104b) to decide whether to approve the association request from the at least one association initiator device (104b).

16. An association method for an association process in a wireless communication network (102), wherein the method comprises following steps of:
providing, by a radio communicator (536) of an association target device (104c) operating as a radio node device, a bi-directional radio communication with at least one of plurality of communication devices,
transmitting (202), by the radio communicator (536) of the association target device (104c), beacon messages comprising load data of the association target device (104c) comprising at least data indicative of number of currently associated router devices of the association target device (104c), and
in response to receiving (212) an association request message from at least one association initiator device (104b), deciding (214), by a controller (530) of the association target device (104c), whether to approve the association request from the at least one association initiator device (104b) on a basis of data indicative of a maximum number of associated devices of said association target device (104c), wherein if the maximum number of allowed associated devices is reached, the association target device (104c) further uses data comprised in the association request message received from the at least one association initiator device (104b) to decide whether to approve the association request from the at least one association initiator device (104b).

17. A computer program comprising instructions, which, when the computer program is executed by a computer, cause the computer to carry out at least the steps of the method according to claim 14 or 16.

18. A tangible, non-volatile computer readable medium comprising the computer program according to claim 17.

## Patentansprüche

1. Assoziationssystem (100) für ein drahtloses Kommunikationsnetzwerk (102), umfassend:
mindestens eine Assoziationsinitiatorvorrichtung (104b), und
mindestens eine Assoziationszielvorrichtung (104c),
wobei die mindestens eine Assoziationsinitiatorvorrichtung (104b) und die mindestens eine Assoziationszielvorrichtung (104c) zu einer Vielzahl von Kommunikationsvorrichtungen (104, 104a, 104b, 104c) gehören;
wobei jede Kommunikationsvorrichtung (104, 104a, 104b, 104c) aus der Vielzahl von Kommunikationsvorrichtungen (104, 104a, 104b, 104c) ein Funkknoten ist, der konfiguriert ist, um eine bidirektionale Funkkommunikation mit mindestens einer der Vielzahl von Kommunikationsvorrichtungen (104, 104a, 104b, 104c) bereitzustellen;
wobei jede Assoziationszielvorrictung (104c) konfiguriert ist, um Beacon-Nachrichten zu senden, die Lastdaten der Assoziationszielvorrichtung (104c) umfassen, darunter mindestens Daten, die die Anzahl der derzeit mit der Assoziationszielvorrichtung (104c) assoziierten Routervorrichtungen angeben;
wobei jede Assoziationsinitiatorvorrichtung (104b) nach dem Empfangen der Beacon-Nachricht von mindestens einer Assoziationszielvorrichtung (104c) konfiguriert ist zum:
Entscheiden, ob versucht werden soll, eine Verbindung mit der mindestens einen Assoziationszielvorrichtung (104c) herzustellen, von dem die Beacon-Nachricht empfangen wurde, und zwar basierend auf den Lastdaten, die mindestens teilweise in der von der mindestens einen Assoziationszielvorrichtung (104c) empfangenen Beacon-Nachricht enthalten sind, und
Senden einer Assoziationsanfragenachricht an jede der mindestens einen Assoziationszielvorrichtungen (104c), mit dem die Assoziationsinitiatorvorrichtung (104b) eine Assoziation herstellen möchte; und
wobei jede Assoziationszielvorrichtung (104c) konfiguriert ist, um als Reaktion auf das Empfangen der Assoziationsanfragenachricht von mindestens einer Assoziationsinitiatorvorrichtung (104b) basierend auf Daten, die die maximale Anzahl der mit dieser Assoziationszielvorrichtung (104c) assoziierten Vorrichtungen angeben, zu entscheiden, ob die Assoziationsanfrage der mindestens einer Assoziationsinitiatorvorrichtung (104b) genehmigt werden soll, wobei, falls die maximal zulässige Anzahl verbundener Vorrichtungen erreicht ist, jede Assoziationszielvorrichtung (104c) ferner konfiguriert ist, um anhand der in der von der mindestens einen Assoziationsinitiatorvorrichtung (104b) empfangenen Anfragenachricht umfassten Daten zu entscheiden, ob die Assoziationsanfrage der mindestens einen Assoziationsinitiatorvorrichtung (104b) genehmigt werden soll.

2. System (100) nach Anspruch 1, wobei die Entscheidung von einer Betriebsrolle der Assoziationsinitiatorvorrichtung (104b) abhängt, wobei die Betriebsrolle der Assoziationsinitiatorvorrichtung (104b) eine Router-Rolle oder eine Nicht-Router-Rolle ist.

3. System (100) nach einem der vorstehenden Ansprüche, wobei die Lastdaten ferner Daten umfassen, die die maximale Anzahl zulässiger verbundener Vorrichtungen angeben, und/oder Daten, die die Anzahl der derzeit verbundenen Nicht-Router-vorrichtungen angeben.

4. Das System (100) nach Anspruch 3, wobei die Lastdaten ferner einen oder mehrere Leistungsparameter umfassen, darunter Lastdaten für den zufälligen Zugriffskanal (RACH), Kanallastdaten, Verkehrslastdaten und/oder Routenkostendaten.

5. System nach einem der vorstehenden Ansprüche, wobei, wenn die Beacon-Nachricht von mindestens zwei Assoziationszielvorrichtungen (104c) empfangen wird, jede Assoziationsinitiatorvorrichtung (104b) konfiguriert ist, um basierend auf mindestens einem Auswahlkriterium mindestens eine am besten geeignete Assoziationszielvorrichtung (104c) auszuwählen.

6. System (100) nach Anspruch 5, wobei das mindestens eine Auswahlkriterium die Lastdaten der mindestens zwei Assoziationszielvorrichtungen (104c) umfasst, die mindestens teilweise in den empfangenen Beacon-Nachrichten der mindestens zwei Assoziationszielvorrichtungen (104c) enthalten sind.

7. System (100) nach Anspruch 6, wobei das mindestens ein Auswahlkriterium ferner Verbindungsqualitätsdaten, die Fähigkeit zur Verwendung einer Modulation höherer Ordnung, die angebotene Mindestbitrate für eine zugehörige Vorrichtung, garantierte End-to-End-Latenz-Eigenschaften und/oder die Verfügbarkeit einer Route zu einer Senkvorrichtung umfasst.

8. System (100) nach einem der vorstehenden Ansprüche, wobei die Assoziationsanfragenachricht Daten umfasst, die eine Betriebsrolle der Assoziationsinitiatorvorrichtung (104b) angeben.

9. System (100) nach Anspruch 8, wobei die Assoziationsanfragenachricht ferner Daten umfasst, die einen Energiesparmodus der Assoziationsinitiatorvorrichtung (104b) angeben, Daten, die die Anzahl der derzeit mit der Assoziationsinitiatorvorrichtung (104b) verbundenen Vorrichtungen angeben, und/oder Daten, die eine Verkehrslast der Assoziationsinitiatorvorrichtung (104b) angeben.

10. System (100) nach einem der vorstehenden Ansprüche, wobei jede Assoziationszielvorrichtung (104c) konfiguriert ist, um mindestens eine derzeit assoziierte Nicht-Router-Vorrichtung zu trennen, falls die maximale Anzahl zulässiger assoziierter Vorrichtungen erreicht ist und die Assoziationszielvorrichtung (104c) beschließt, die Assoziierungsanfrage von mindestens einer in einer Router-Rolle operierenden Assoziationsinitiatorvorrichtung (104b) zu genehmigen.

11. System (100) nach einem der vorstehenden Ansprüche, wobei das drahtlose Kommunikationsnetzwerk (102) ein drahtloses Sensornetzwerk (WSN), ein auf dem Standard für digitale europäische schnurlose Telekommunikation 2020 (DECT-2020) basierendes Netzwerk oder ein drahtloses Mesh-Netzwerk ist.

12. Assoziationsverfahren für ein drahtloses Kommunikationsnetzwerk (102), wobei das Verfahren die folgenden Schritte umfasst:
Präsentieren mindestens einer Assoziationsinitiatorvorrichtung (104b) und mindestens einer Assoziationszielvorrichtung (104c), die zu einer Vielzahl von Kommunikationsvorrichtungen (104, 104a, 104b, 104c) gehören, die als Funkknotenvorrichtungen arbeiten;
Bereitstellen einer bidirektionalen Funkkommunikation durch jede Kommunikationsvorrichtung (104, 104a, 104b, 104c) aus der Vielzahl der Kommunikationsvorrichtungen mit mindestens einer der Kommunikationsvorrichtungen aus dieser Vielzahl;
Übertragen (202) von Beacon-Nachrichten durch jede Assoziationszielvorrichtung (104c), wobei diese Beacon-Nachrichten Lastdaten der Assoziationszielvorrichtung (104c) umfassen, die mindestens Daten umfassen, die die Anzahl der derzeit mit der Assoziationszielvorrichtung (104c) assoziierten Router-Vorrichtungen angeben;
nach dem Empfangen (204) der Beacon-Nachricht von mindestens einer Assoziationszielvorrichtung (104c), Entscheiden (208), durch jede Assoziationsinitiatorvorrichtung (104b), ob versucht werden soll, eine Assoziation mit der mindestens einen Assoziationszielvorrichtung (104c) herzustellen, von der die Beacon-Nachricht empfangen wurde, und zwar basierend auf den Lastdaten, die mindestens teilweise in der empfangenen Beacon-Nachricht von der mindestens einen Assoziationszielvorrichtung (104c) umfasst sind,
Senden (210) einer Assoziationsanfragenachricht durch jede Assoziationsinitiierungsvorrichtung (104b) an jede der mindestens einen Assoziationszielvorrichtung (104c), mit der die Assoziationsinitiierungsvorrichtung (104b) eine Assoziierung zu versuchen beschließt, und
als Reaktion auf das Empfangen (212) der Assoziationsanfragenachricht von mindestens einer Assoziationsinitiatovorrichtung (104b), Entscheiden (214) durch jede Assoziationszielvorrichtung (104c), ob die Assoziationsanfrage von der mindestens einen Assoziationsinitiatovorrichtung (104b) basierend auf Daten, die die maximale Anzahl assoziierter Vorrichtungen der Assoziationszielvorrichtung (104c) angeben, genehmigt werden soll, wobei, falls die maximal zulässige Anzahl assozierter Vorrichtungen erreicht ist, jede Assoziationszielvorrichtung (104c) ferner die in der von der mindestens einen Assoziationsinitiatorvorrichtung (104b) empfangenen Anfragenachricht enthaltenen Daten verwendet, um zu entscheiden, ob die Assoziationsanfrage der mindestens einen Assoziationsinitiatorvorrichtung (104b) genehmigt werden soll.

13. Assoziationsinitiatorvorrichtung (104b) zur Teilnahme an einem Assoziationsprozess in einem drahtlosen Kommunikationsnetzwerk (102), wobei die Asssoziationsinitiatorvorrichtung (104b) Folgendes umfasst:
eine Steuerung (530), und
einen Funkkommunikator (536) zum Betrieb als Funkknotenvorrichtung, wobei die Assoziationsinitiatorvorrichtung (104b) konfiguriert ist, um über den Funkkommunikator (536) eine bidirektionale Funkkommunikation mit mindestens einer aus einer Vielzahl von Kommunikationsvorrichtungen bereitzustellen;
wobei die Assoziationsinitiatorvorrichtung (104b) nach dem Empfangen einer Beacon-Nachricht von mindestens einer Assoziationszielvorrichtung (104c) durch die Funkkommunikationsvorrichtung (536) konfiguriert ist zum:
Entscheiden, durch die Steuerung (530), ob versucht werden soll, eine Verbindung zu der mindestens einen Assoziationszielvorrichtung (104c) herzustellen, von der die Beacon-Nachricht empfangen wird, und zwar basierend auf Lastdaten, die mindestens teilweise in der empfangenen Beacon-Nachricht von der mindestens einen Assoziationszielvorrichtung (104c) umfasst sind, wobei die Beacon-Nachricht die Lastdaten der Assoziationszielvorrichtung (104c) umfasst, die mindestens Angaben zur Anzahl der derzeit mit der Assoziationszielvorrichtung (104c) assoziierten Router-Vorrichtungen enthalten, und
Senden, über den Funkkommunikator (536), einer Assoziationsanfragenachricht an jede der mindestens einen Assoziationszielvorrichtungen (104c), mit der die Assoziationsinitiatorvorrichtung (104b) eine Assoziation herstellen möchte.

14. Assoziationsverfahren für einen Assoziationsprozess in einem drahtlosen Kommunikationsnetzwerk (102), wobei das Verfahren die folgenden Schritte umfasst:
Bereitstellen einer bidirektionalen Funkkommunikation mit mindestens einer Vielzahl von Kommunikationsvorrichtungen durch einen Funkkommunikator (536) einer Assoziationsinitiatorvorrichtung (104b), die als Funkknotenvorrichtung fungiert;
nach dem Empfangen (204) einer Beacon-Nachricht von mindestens einer Assoziationszielvorrichtung (104c), Entscheiden (208), durch eine Steuerung (530) der Assoziationsinitiatorvorrichtung (104b), ob versucht werden soll, eine Assoziation mit der mindestens einen Assoziationszielvorrichtung (104c) herzustellen, von der die Beacon-Nachricht empfangen wurde, und zwar basierend auf Lastdaten, die mindestens teilweise in der empfangenen Beacon-Nachricht von der mindestens einen Assoziationszielvorrichtung (104c) umfasst sind, wobei die Beacon-Nachricht die Lastdaten der Assoziationszielvorrichtung (104c) umfasst, die mindestens Angaben zur Anzahl der derzeit mit der Assoziationszielvorrichtung (104c) assoziierten Router-Vorrichtungen enthalten; und
Senden (210) einer Assoziationsanfragenachricht durch den Funkkommunikator (536) der Assoziationsinitiatorvorrichtung (104b) an jede der mindestens einen Assoziationszielvorrichtung (104c), mit der die Assoziationsinitiatorvorrichtung (104b) eine Assoziation herstellen möchte.

15. Assoziationszielvorrichtung (104c) zur Teilnahme an einem Assoziationsprozess in einem drahtlosen Kommunikationsnetzwerk (102), wobei die Asssoziationszielvorrichtung (104c) Folgendes umfasst:
eine Steuerung (530), und
einen Funkkommunikator (536) zum Betrieb als Funkknotenvorrichtung,
wobei die Assoziationszielvorrichtung (104c) konfiguriert ist, um über den Funkkommunikator (536) eine bidirektionale Funkkommunikation mit mindestens einer aus einer Vielzahl von Kommunikationsvorrichtungen bereitzustellen,
wobei die Assoziationszielvorrichtung (104c) konfiguriert ist, um über den Funkkommunikator (536) Beacon-Nachrichten zu senden, die Lastdaten der Assoziationszielvorrichtung umfassen, wobei diese Angaben mindestens Daten enthalten, die die Anzahl der derzeit mit der Assoziationszielvorrichtung (104c) assoziierten Router-Vorrichtungen angeben, eine
wobei als Reaktion auf das Empfangen einer Assoziationsanfragesnachricht von mindestens einer Assoziationsinitiatorvorrichtung (104b) die Assoziationszielvorrichtung (104c) konfiguriert ist, dum die Steuerung (530) basierend auf Daten, die die maximale Anzahl assoziierter Vorrichtungen der Assoziationszielvorrichtung (104c) angeben, zu entscheiden, ob die Assoziationsanfrage von der mindestens einen Assoziationsinitiatorvorrichtung (104b) genehmigt werden soll, wobei, falls die maximal zulässige Anzahl assozierter Vorrichtungen erreicht ist, die Assoziationszielvorrichtung (104c) ferner konfiguriert ist, um die in der von der mindestens einen Assoziationsinitiatorvorrichtung (104b) empfangenen Assoziationsanfragenachricht umfassten Daten zu verwenden, um zu entscheiden, ob die Assoziationsanfrage der mindestens einen Assoziationsinitiatorvorrichtung (104b) genehmigt werden soll.

16. Assoziationsverfahren für einen Assoziationsprozess in einem drahtlosen Kommunikationsnetzwerk (102), wobei das Verfahren die folgenden Schritte umfasst:
Bereitstellen einer bidirektionalen Funkkommunikation mit mindestens einer Vielzahl von Kommunikationsvorrichtungen durch einen Funkkommunikator (536) einer Assoziationszielvorrichtung (104c), die als Funkknotenvorrichtung,
Übertragen (202) von Beacon-Nachrichten durch den Funkkommunikator (536) der Assoziationszielvorrichtung (104c), wobei diese Beacon-Nachrichten Lastdaten der Assoziationszielvorrichtung (104c) umfassen, die mindestens Angaben zur Anzahl der derzeit mit der Assoziationszielvorrichtung (104c) assoziierten Router-Vorrichtungen enthalten, und
als Reaktion auf das Empfangen (212) einer Assoziationsanfragenachricht von mindestens einer Assoziationsinitiatorvorrichtung (104b), Entscheiden (214), durch eine Steuerung (530) der Assoziationszielvorrichtung (104c), ob die Assoziationssanfrage der mindestens einen Assoziationsinitiatorvorrichtung (104b) basierend auf Daten, die die maximale Anzahl assoziierter Vorrichtungen der Assoziationszielvorrichtung (104c) angeben, genehmigt werden soll, wobei, falls die maximal zulässige Anzahl assozierter Vorrichtungen erreicht ist, die Assoziationszielvorrichtung (104c) ferner die in der von der mindestens einen Assoziationsinitiatorvorrichtung (104b) empfangenen Anfragenachricht enthaltenen Daten verwendet, um zu entscheiden, ob die Assoziationsanfrage der mindestens einen Assoziationsinitiatorvorrichtung (104b) genehmigt werden soll.

17. Computerprogramm, umfassend Anweisungen, die, wenn das Computerprogramm von einem Computer ausgeführt wird, bewirken, dass der Computer mindestens die Schritte des Verfahrens nach Anspruch 14 oder 16 durchführt.

18. Materielles, nichtflüchtiges, computerlesbares Medium, umfassend das Computerprogramm nach Anspruch 17.

## Revendications

1. Système d'association (100) destiné à un réseau de communication sans fil (102), comprenant :
au moins un dispositif initiateur d'association (104b), et
au moins un dispositif cible d'association (104c),
dans lequel l'au moins un dispositif initiateur d'association (104b) et l'au moins un dispositif cible d'association (104c) appartiennent à une pluralité de dispositifs de communication (104, 104a, 104b, 104c) ;
dans lequel chaque dispositif de communication (104, 104a, 104b, 104c) de la pluralité de dispositifs de communication (104, 104a, 104b, 104c) est un dispositif de nœud radio configuré pour fournir une communication radio bidirectionnelle avec au moins l'un parmi la pluralité des dispositifs de communication (104, 104a, 104b, 104c) ;
dans lequel chaque dispositif cible d'association (104c) est configuré pour transmettre des messages de balise comprenant des données de charge dudit dispositif cible d'association (104c), comprenant au moins des données indiquant le nombre de dispositifs routeurs associés actuellement dudit dispositif cible d'association (104c) ;
dans lequel, après avoir reçu le message de balise à partir d'au moins un dispositif cible d'association (104c), chaque dispositif initiateur d'association (104b) est configuré pour :
décider s'il convient de tenter de s'associer avec l'au moins un dispositif cible d'association (104c) à partir duquel le message de balise est reçu sur une base des données de charge comprises au moins en partie dans le message de balise reçu à partir dudit au moins un dispositif cible d'association (104c), et
envoyer un message de demande d'association à chacun de l'au moins un dispositif cible d'association (104c) avec lequel ledit dispositif initiateur d'association (104b) décide de tenter de s'associer ; et
dans lequel en réponse à la réception du message de demande d'association à partir d'au moins un dispositif initiateur d'association (104b), chaque dispositif cible d'association (104c) est configuré pour décider s'il convient d'approuver la demande d'association à partir de l'au moins un dispositif initiateur d'association (104b) sur la base de données indiquant un nombre maximal de dispositifs associés dudit dispositif cible d'association (104c), dans lequel si le nombre maximal de dispositifs associés autorisés est atteint, chaque dispositif cible d'association (104c) est en outre configuré pour utiliser les données comprises dans le message de demande d'association reçu à partir de l'au moins un dispositif initiateur d'association (104b) pour décider s'il convient d'approuver la demande d'association à partir de l'au moins un dispositif initiateur d'association (104b).

2. Système (100) selon la revendication 1, dans lequel la décision dépend d'un rôle opérationnel du dispositif initiateur d'association (104b), le rôle opérationnel du dispositif initiateur d'association (104b) est un rôle de routeur ou un rôle de non-routeur.

3. Système (100) selon l'une quelconque des revendications précédentes, dans lequel les données de charge comprennent en outre des données indiquant le nombre maximal de dispositifs associés autorisés, et/ou des données indiquant le nombre de dispositifs non-routeurs associés actuellement.

4. Système (100) selon la revendication 3, dans lequel les données de charge comprennent en outre un ou plusieurs paramètres de performance comprenant des données de charge de canal à accès aléatoire (RACH), des données de charge de canal, des données de charge de trafic et/ou des données de coût d'itinéraire.

5. Système selon l'une quelconque des revendications précédentes, dans lequel si le message de balise est reçu à partir d'au moins deux dispositifs cibles d'association (104c), chaque dispositif initiateur d'association (104b) est configuré pour sélectionner au moins un dispositif cible d'association (104c) le plus approprié sur la base d'au moins un critère de sélection.

6. Système (100) selon la revendication 5, dans lequel l'au moins un critère de sélection comprend les données de charge des l'au moins deux dispositifs cibles d'association (104c) comprises au moins en partie dans les messages de balise reçus à partir des l'au moins deux dispositifs cibles d'association (104c).

7. Système (100) selon la revendication 6, dans lequel l'au moins un critère de sélection comprend en outre des données de qualité de liaison, la capacité à utiliser une modulation d'ordre supérieur, le débit binaire minimal offert pour un dispositif associé, des caractéristiques de latence de bout en bout garanties et/ou la disponibilité d'un itinéraire vers un dispositif récepteur.

8. Système (100) selon l'une quelconque des revendications précédentes, dans lequel le message de demande d'association comprend des données indiquant un rôle opérationnel du dispositif initiateur d'association (104b).

9. Système (100) selon la revendication 8, dans lequel le message de demande d'association comprend en outre des données indiquant un mode d'économie d'énergie du dispositif initiateur d'association (104b), des données indiquant le nombre de dispositifs associés actuellement du dispositif initiateur d'association (104b), et/ou des données indiquant une charge de trafic du dispositif initiateur d'association (104b).

10. Système (100) selon l'une quelconque des revendications précédentes, dans lequel chaque dispositif cible d'association (104c) est configuré pour dissocier au moins un dispositif non-routeur associé actuellement, si le nombre maximal de dispositifs associés autorisés est atteint et si ledit dispositif cible d'association (104c) décide d'approuver la demande d'association à partir d'au moins un dispositif initiateur d'association (104b) fonctionnant dans un rôle de routeur.

11. Système (100) selon l'une quelconque des revendications précédentes, dans lequel le réseau de communication sans fil (102) est un réseau de capteurs sans fil (WSN), un réseau basé sur la norme DECT-2020 (Digital European Cordless Telecommunication 2020) ou un réseau maillé sans fil.

12. Procédé d'association destiné à un réseau de communication sans fil (102), dans lequel le procédé comprend les étapes suivantes consistant à :
présenter au moins un dispositif initiateur d'association (104b) et au moins un dispositif cible d'association (104c) appartenant à une pluralité de dispositifs de communication (104, 104a, 104b, 104c) fonctionnant comme des dispositifs de nœuds radio ;
fournir, par chaque dispositif de communication (104, 104a, 104b, 104c) parmi la pluralité de dispositifs de communication, une communication radio bidirectionnelle avec au moins l'un parmi la pluralité de dispositifs de communication ;
transmettre (202), par chaque dispositif cible d'association (104c), des messages de balise comprenant des données de charge dudit dispositif cible d'association (104c) comprenant au moins des données indiquant le nombre de dispositifs routeurs associés actuellement dudit dispositif cible d'association (104c) ;
après avoir reçu (204) le message de balise à partir d'au moins un dispositif cible d'association (104c), décider (208), par chaque dispositif initiateur d'association (104b), s'il convient de tenter de s'associer avec l'au moins un dispositif cible d'association (104c) à partir duquel le message de balise est reçu sur la base des données de charge comprises au moins en partie dans le message de balise reçu à partir dudit au moins un dispositif cible d'association (104c), l'envoi (210), par chaque dispositif initiateur d'association (104b), d'un message de demande d'association à chacun de l'au moins un dispositif cible d'association (104c) avec lequel ledit dispositif initiateur d'association (104b) décide de tenter de s'associer, et
en réponse à la réception (212) du message de demande d'association à partir d'au moins un dispositif initiateur d'association (104b), décider (214), par chaque dispositif cible d'association (104c), s'il convient d'approuver la demande d'association à partir de l'au moins un dispositif initiateur d'association (104b) sur la base de données indiquant un nombre maximal de dispositifs associés dudit dispositif cible d'association (104c), dans lequel si le nombre maximal de dispositifs associés autorisés est atteint, chaque dispositif cible d'association (104c) utilise en outre les données comprises dans le message de demande d'association reçu à partir de l'au moins un dispositif initiateur d'association (104b) pour décider s'il convient d'approuver la demande d'association à partir de l'au moins un dispositif initiateur d'association (104b).

13. Dispositif initiateur d'association (104b) destiné à participer à un processus d'association dans un réseau de communication sans fil (102), dans lequel le dispositif initiateur d'association (104b) comprend :
un contrôleur (530), et
un radiocommunicateur (536) destiné à fonctionner comme un dispositif de nœud radio, dans lequel le dispositif initiateur d'association (104b) est configuré pour fournir, par le radiocommunicateur (536), une communication radio bidirectionnelle avec au moins l'un parmi une pluralité de dispositifs de communication ;
dans lequel après avoir reçu, par le radiocommunicateur (536), un message de balise à partir d'au moins un dispositif cible d'association (104c), le dispositif initiateur d'association (104b) est configuré pour :
décider, par le contrôleur (530), s'il convient de tenter de s'associer avec l'au moins un dispositif cible d'association (104c) à partir duquel le message de balise est reçu sur la base de données de charge comprises au moins en partie dans le message de balise reçu à partir d'au moins un dispositif cible d'association (104c), dans lequel le message de balise comprend les données de charge dudit dispositif cible d'association (104c) comprenant au moins des données indiquant le nombre de dispositifs routeurs associés actuellement dudit dispositif cible d'association (104c), et
envoyer, par le radiocommunicateur (536), un message de demande d'association à chacun de l'au moins un dispositif cible d'association (104c) avec lequel ledit dispositif initiateur d'association (104b) décide de tenter de s'associer.

14. Procédé d'association destiné à un processus d'association dans un réseau de communication sans fil (102), dans lequel le procédé comprend les étapes suivantes consistant à :
fournir, par un radiocommunicateur (536) d'un dispositif initiateur d'association (104b) fonctionnant comme un dispositif de nœud radio, une communication radio bidirectionnelle avec au moins l'un parmi une pluralité de dispositifs de communication ;
après avoir reçu (204) un message de balise à partir d'au moins un dispositif cible d'association (104c), décider (208), par un contrôleur (530) du dispositif initiateur d'association (104b), s'il convient de tenter de s'associer avec l'au moins un dispositif cible d'association (104c) à partir duquel le message de balise est reçu sur la base de données de charge comprises au moins en partie dans le message de balise reçu à partir d'au moins ledit dispositif cible d'association (104c), dans lequel le message de balise comprend les données de charge dudit dispositif cible d'association (104c) comprenant au moins des données indiquant le nombre de dispositifs routeurs associés actuellement dudit dispositif cible d'association (104c) ; et
envoyer (210), par le radiocommunicateur (536) du dispositif initiateur d'association (104b), un message de demande d'association à chacun de l'au moins un dispositif cible d'association (104c) avec lequel ledit dispositif initiateur d'association (104b) décide de tenter de s'associer.

15. Dispositif cible d'association (104c) destiné à participer à un processus d'association dans un réseau de communication sans fil (102), dans lequel le dispositif cible d'association (104c) comprend :
un contrôleur (530), et
un radiocommunicateur (536) destiné à fonctionner comme un dispositif de nœud radio,
dans lequel le dispositif cible d'association (104c) est configuré pour fournir, par le radiocommunicateur (536), une communication radio bidirectionnelle avec au moins l'un parmi une pluralité de dispositifs de communication,
dans lequel le dispositif cible d'association (104c) est configuré pour transmettre, par le radiocommunicateur (536), des messages de balise comprenant des données de charge du dispositif cible d'association comprenant au moins des données indiquant le nombre de dispositifs routeurs associés actuellement du dispositif cible d'association (104c), et
dans lequel en réponse à la réception d'un message de demande d'association à partir d'au moins un dispositif initiateur d'association (104b), le dispositif cible d'association (104c) est configuré pour décider, par le contrôleur (530), s'il convient d'approuver la demande d'association à partir de l'au moins un dispositif initiateur d'association (104b) sur la base de données indiquant un nombre maximal de dispositifs associés dudit dispositif cible d'association (104c), dans lequel si le nombre maximal de dispositifs associés autorisés est atteint, le dispositif cible d'association (104c) est en outre configuré pour utiliser les données comprises dans le message de demande d'association reçu à partir de l'au moins un dispositif initiateur d'association (104b) pour décider s'il convient d'approuver la demande d'association à partir de l'au moins un dispositif initiateur d'association (104b).

16. Procédé d'association destiné à un processus d'association dans un réseau de communication sans fil (102), dans lequel le procédé comprend les étapes suivantes consistant à :
fournir, par un radiocommunicateur (536) d'un dispositif cible d'association (104c) fonctionnant comme un dispositif de nœud radio, une communication radio bidirectionnelle avec au moins l'un parmi une pluralité de dispositifs de communication,
transmettre (202), par le radiocommunicateur (536) du dispositif cible d'association (104c), des messages de balise comprenant des données de charge du dispositif cible d'association (104c) comprenant au moins des données indiquant le nombre de dispositifs routeurs associés actuellement du dispositif cible d'association (104c), et
en réponse à la réception (212) d'un message de demande d'association à partir d'au moins un dispositif initiateur d'association (104b), décider (214), par un contrôleur (530) du dispositif cible d'association (104c), s'il convient d'approuver la demande d'association à partir de l'au moins un dispositif initiateur d'association (104b) sur la base de données indiquant un nombre maximal de dispositifs associés dudit dispositif cible d'association (104c), dans lequel si le nombre maximal de dispositifs associés autorisés est atteint, le dispositif cible d'association (104c) utilise en outre les données comprises dans le message de demande d'association reçu à partir de l'au moins un dispositif initiateur d'association (104b) pour décider s'il convient d'approuver la demande d'association à partir de l'au moins un dispositif initiateur d'association (104b).

17. Programme informatique comprenant des instructions, qui, lorsque le programme informatique est exécuté par un ordinateur, amènent l'ordinateur à effectuer au moins les étapes du procédé selon la revendication 14 ou 16.

18. Support lisible par ordinateur non transitoire, tangible, comprenant le programme informatique selon la revendication 17.
